# EUROPEAN PATENT APPLICATION

(11) **EP 4 734 568 A1**
(43) Date of publication of application: **29.04.2026**
(21) Application number: 24841937.6
(22) Date of filing: 29.02.2024
(51) Int. Cl.: H04W 4/70

(54) **COMMUNICATION METHOD, ELECTRONIC DEVICE, AND STORAGE MEDIUM**

(30) Priority: 17.07.2023 CN 202310877207
(71) Applicant: Honor Device Co., Ltd., Shenzhen, Guangdong 518040 (CN)
(72) Inventor: MA, Hongyang, Shenzhen, Guangdong 518040 (CN); HOU, Tianyi, Shenzhen, Guangdong 518040 (CN); ZHAO, Chen, Shenzhen, Guangdong 518040 (CN)
(74) Representative: Gill Jennings & Every LLP
(86) International application number: PCT/CN2024/079369
(87) International publication number: WO 2025/015933

(57) **Abstract**

This application relates to the field of communication technologies, and discloses a communication method, an electronic device, and a storage medium. The communication method includes: When a first terminal device has performed a connection to a first wireless access device based on a first channel (for example, a dynamic frequency selection channel), it may be determined whether both a configuration of the first terminal device and a configuration of a second terminal device support performing peer-to-peer communication in the first channel. When it is determined that both the configurations support establishing peer-to-peer communication in the first channel, peer-to-peer communication between two terminal devices may be established based on the foregoing first channel accessing a network. According to the foregoing solution, it can be ensured that a channel for communication between a device of at least one end and a wireless access device is the same as a channel for peer-to-peer communication between two terminal devices, to effectively reduce occurrence of a scenario in which the terminal device performs time division switching between different channels, increase time for transmitting data in a peer-to-peer channel, and avoid a phenomenon like picture freezing, thereby improving user experience.

## Description

This application claims priority to Chinese Patent Application No. 202310877207.6, filed with the China National Intellectual Property Administration on July 17, 2023 and entitled "COMMUNICATION METHOD, ELECTRONIC DEVICE, AND STORAGE MEDIUM", which is incorporated herein by reference in its entirety.

### TECHNICAL FIELD

This application relates to the field of communication technologies, and in particular, to a communication method, an electronic device, and a storage medium.

### BACKGROUND

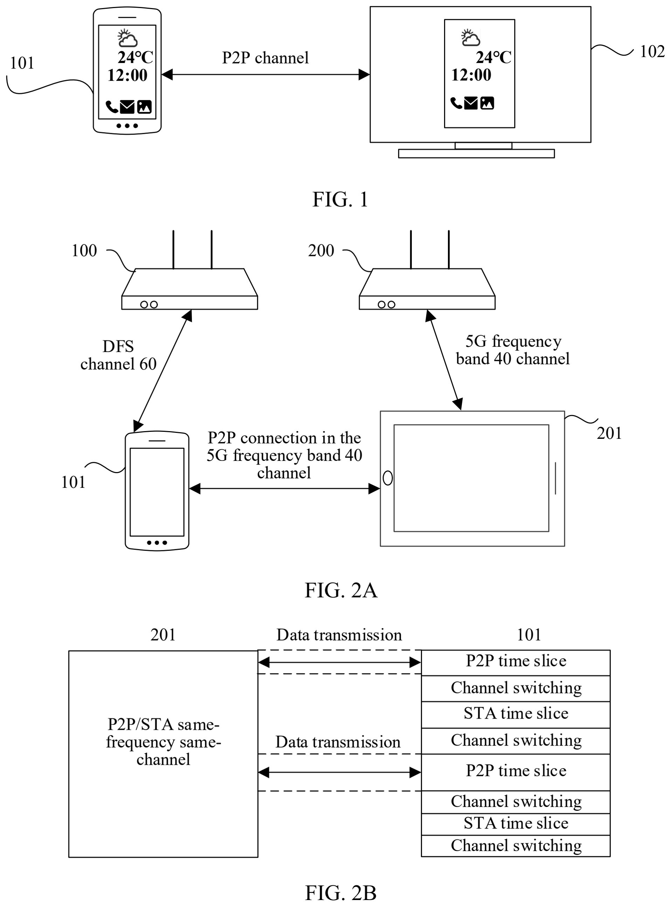

Currently, terminal devices (for example, mobile phones or tablets) may directly exchange information based on a peer-to-peer (Peer-to-Peer, P2P) technology, to share computing resources and services. The P2P technology is to implement information transmission between two terminal devices directly through a channel, without participation of an intermediate link and a server. For example, as shown in FIG. 1, a mobile phone 101 and a personal computer 102 may perform screen projection based on the P2P technology, to share computing resources.

Currently, there are some cases that a channel for communication between a terminal device and a wireless router is different from a channel for P2P communication between two terminal devices. Consequently, the terminal device needs to perform time division transmission between two different channels. For example, a data sending end device may transmit data with the wireless router in a preset first time period; perform, in a preset second time period, switching to a P2P channel for P2P data transmission with a data receiving end device; and perform, in a preset third time period, switching to a channel for communication with the wireless router again. Switching by the terminal device between different channels causes a short time slice for P2P data transmission between the terminal devices. For example, in a screen projection scenario, data of screen projection can be transmitted until time slices for P2P data transmission between two terminal devices correspond to each other. Consequently, phenomena such as freezing and delay of a projected picture are prone to occur, affecting user experience.

### SUMMARY

To resolve the foregoing problem, this application provides a communication method, an electronic device, and a storage medium.

According to a first aspect, this application provides a communication method. The method includes: performing, by a first terminal device, a connection to a first wireless access device based on a first channel; receiving, by the first terminal device, a first instruction for establishing a connection of peer-to-peer communication to a second terminal device; determining that both the first terminal device and the second terminal device support performing peer-to-peer communication based on the first channel; and establishing peer-to-peer communication between the first terminal device and the second terminal device based on the foregoing first channel.

In this application, the first channel may be any channel of dynamic frequency selection (Dynamic Frequency Selection, DFS) channels. The first instruction may be that the first terminal device receives indication information that is for performing peer-to-peer communication and that is received by the second terminal device in a device discovery process. For example, if the first terminal device is a personal computer and the second terminal device is a mobile phone, the first instruction may be a request frame sent by the mobile phone to the personal computer after screen projection of the mobile phone is enabled. The first terminal device may be any electronic device like a mobile phone, a tablet, a computer, a virtual reality (virtual reality, VR) device, a wearable device, or an augmented reality (augmented reality, AR) device. The first wireless access device may be a wireless router, a wireless access point, or the like in the following description. The second terminal device may be any electronic device like a mobile phone, a tablet, a computer, a VR device, a wearable device, or an AR device.

It may be understood that in this application, when the first terminal device has accessed a wireless network based on the first channel, it needs to be determined whether both a configuration of the first terminal device and a configuration of the second terminal device support performing peer-to-peer communication (that is, P2P communication) in the first channel. When it is determined that both the configuration of the first terminal device and the configuration of the second terminal device support establishing P2P communication in the first channel, a P2P channel between two terminal devices may be established based on the foregoing first channel accessing the network.

According to the foregoing solution, it can be ensured that a channel for communication between a device of at least one end and a wireless access device is the same as a channel for P2P communication between two terminal devices, to effectively reduce occurrence of a scenario in which the terminal device performs time division switching between different channels, increase time for transmitting data in the P2P channel, and avoid a phenomenon like picture freezing, thereby improving user experience.

In a possible implementation, the foregoing first channel is a dynamic frequency selection channel.

In this application, DFS channels are a plurality of channels having an automatic switching function in a 5 GHz radio frequency band. After a device accesses a DFS channel in the 5 GHz frequency band, when a radar signal is detected in one of the channels, the device may automatically perform switching to another channel to avoid interference of the radar signal.

It may be understood that in this application, the first channel may be any channel of the DFS channels.

It may be understood that in this application, the first terminal device performs the connection to the first wireless access device based on any channel of the DFS channels, to access the wireless network.

In a possible implementation, the method further includes: if it is determined that the first terminal device or the second terminal device does not support performing peer-to-peer communication based on the first channel, and it is determined that the second terminal device performs a connection to a second wireless access device based on a second channel, where the second channel includes any channel of non-dynamic frequency selection channels, establishing peer-to-peer communication between the first terminal device and the second terminal device based on the second channel.

In this application, the first channel may be any channel of the DFS channels; and the second channel may be any channel of the non-DFS channels.

It may be understood that in this application, when it is determined that the first terminal device performs the connection to the first wireless access device based on any channel of the DFS channels, and it is determined that the configuration of the first terminal device or the configuration of the second terminal device does not support establishing P2P communication in the first channel, a wireless network connection status of the second terminal device needs to be determined. If it is determined that the second terminal device performs the connection to the second wireless access device based on any channel of the non-DFS channels, P2P communication between the two terminal devices may be established based on the non-DFS channel. In this way, it can be ensured that the channel for communication between the second terminal device and the wireless access device is the same as the channel for P2P communication between the two terminal devices, to avoid occurrence of a scenario in which the second terminal device performs time division switching between different channels, thereby improving channel transmission performance and user experience.

In a possible implementation, the method further includes: if it is determined that the first terminal device or the second terminal device does not support performing peer-to-peer communication based on the first channel, and it is determined that the second terminal device performs a connection to a second wireless access device based on a third channel, where the third channel is a dynamic frequency selection channel, establishing peer-to-peer communication between the first terminal device and the second terminal device based on a fourth channel, where the fourth channel includes any channel of non-dynamic frequency selection channels.

In this application, the first channel may be any channel of the DFS channels; the third channel may be any channel of the DFS channels; and the fourth channel may be any channel of the non-DFS channels.

It may be understood that in this application, when it is determined that the first terminal device performs the connection to the first wireless access device based on any channel of the DFS channels, and it is determined that the configuration of the first terminal device or the configuration of the second terminal device does not support establishing P2P communication in the first channel, a wireless network connection status of the second terminal device needs to be determined. If it is determined that the second terminal device performs the connection to the second wireless access device based on any channel of the DFS channels, P2P communication between the two terminal devices may be established based on the fourth channel, that is, any channel of the non-DFS channels (for example, a 149 channel configured by a system by default).

In a possible implementation, the method further includes: if it is determined that the first terminal device or the second terminal device does not support performing peer-to-peer communication based on the first channel, and it is determined that the second terminal device performs no connection to a second wireless access device, establishing peer-to-peer communication between the first terminal device and the second terminal device based on a fourth channel, where the fourth channel includes any channel of non-dynamic frequency selection channels.

In this application, the first channel may be any channel of the DFS channels; and the fourth channel may be any channel of the non-DFS channels.

It may be understood that in this application, when it is determined that the first terminal device performs the connection to the first wireless access device based on any channel of the DFS channels, and it is determined that the configuration of the first terminal device or the configuration of the second terminal device does not support establishing P2P communication in the first channel, a wireless network connection status of the second terminal device needs to be determined. If it is determined that the second terminal device performs no connection to the second wireless access device, P2P communication between the two terminal devices may be established based on the fourth channel, that is, any channel of the non-DFS channels (for example, a 149 channel configured by a system by default).

In a possible implementation, the method further includes: performing, by the first terminal device, no connection to the first wireless access device; and if it is determined that the second terminal device performs a connection to a second wireless access device based on a second channel, where the second channel includes any channel of non-DFS channels, establishing peer-to-peer communication between the first terminal device and the second terminal device based on the second channel.

In this application, the second channel may be any channel of the non-DFS channels.

It may be understood that in this application, when it is determined that the first terminal device performs no connection to the first wireless access device to access the wireless network, a wireless network connection status of the second terminal device needs to be determined. If it is determined that the second terminal device performs the connection to the second wireless access device based on any channel of the non-DFS channels, P2P communication between the two terminal devices may be established based on the non-DFS channel. In this way, the first terminal device is in single-channel communication, and the channel for communication between the second terminal device and the second wireless access device is the same as the channel for P2P communication between the two terminal devices, to avoid that the terminal device and the second terminal device perform time division switching between different channels, and effectively reduce occurrence of a scenario of time division multiplexing, thereby improving channel transmission performance and user experience.

In a possible implementation, the method further includes: performing, by the first terminal device, no connection to the first wireless access device; and if it is determined that the second terminal device performs a connection to a second wireless access device based on a third channel, and it is determined that both the first terminal device and the second terminal device support performing peer-to-peer communication based on the third channel, where the third channel is a dynamic frequency selection channel, establishing peer-to-peer communication between the first terminal device and the second terminal device based on the foregoing third channel.

In this application, the third channel may be any channel of the DFS channels.

It may be understood that in this application, when it is determined that the first terminal device performs no connection to the first wireless access device to access the wireless network, a wireless network connection status of the second terminal device needs to be determined. If it is determined that the second terminal device performs the connection to the second wireless access device based on any channel of the DFS channels, it needs to be determined whether both the configuration of the first terminal device and the configuration of the second terminal device support performing peer-to-peer communication (that is, P2P communication) in the third channel. When it is determined that both the configuration of the first terminal device and the configuration of the second terminal device support establishing P2P communication in the third channel, the P2P channel between the two terminal devices may be established based on the foregoing third channel of the second terminal device accessing the network.

According to the foregoing solution, the first terminal device is in single-channel communication, and the channel for communication between the second terminal device and the second wireless access device is the same as the channel for P2P communication between the two terminal devices, to avoid that the first terminal device and the second terminal device perform time division switching between different channels, and effectively reduce occurrence of a scenario of time division multiplexing, thereby improving channel transmission performance and user experience.

In a possible implementation, the method further includes: performing, by the first terminal device, no connection to the first wireless access device; and if it is determined that the second terminal device performs a connection to a second wireless access device based on a third channel, and it is determined that the first terminal device or the second terminal device does not support performing peer-to-peer communication based on the third channel, where the third channel is a dynamic frequency selection channel, establishing peer-to-peer communication between the first terminal device and the second terminal device based on a fourth channel, where the fourth channel includes any channel of non-dynamic frequency selection channels.

In this application, the third channel may be any channel of the DFS channels; and the fourth channel may be any channel of the non-DFS channels.

It may be understood that in this application, when it is determined that the first terminal device performs no connection to the first wireless access device to access the wireless network, a wireless network connection status of the second terminal device needs to be determined. If it is determined that the second terminal device performs the connection to the second wireless access device based on any channel of the DFS channels, it needs to be determined whether both the configuration of the first terminal device and the configuration of the second terminal device support performing P2P communication in the third channel. When it is determined that the configuration of the first terminal device or the configuration of the second terminal device does not support establishing P2P communication in the third channel, the P2P channel between the two terminal devices may be established based on the fourth channel, that is, any channel of the non-DFS channels.

In a possible implementation, the method further includes: performing, by the first terminal device, no connection to the first wireless access device; and if it is determined that the second terminal device performs no connection to a second wireless access device, establishing peer-to-peer communication between the first terminal device and the second terminal device based on a fourth channel, where the fourth channel includes any channel of non-dynamic frequency selection channels.

In this application, the fourth channel may be any channel of the non-DFS channels.

It may be understood that in this application, when it is determined that the first terminal device performs no connection to the first wireless access device to access the wireless network, a wireless network connection status of the second terminal device needs to be determined. If it is also determined that the second terminal device performs no connection to the second wireless access device, P2P communication between the two terminal devices may be established based on the fourth channel, that is, any channel of the non-DFS channels (for example, a 149 channel configured by a system by default).

In a possible implementation, the method further includes: if the first terminal device performs the connection to the first wireless access device based on a fifth channel, establishing peer-to-peer communication between the first terminal device and the second terminal device based on the fifth channel, where the fifth channel includes any channel of non-dynamic frequency selection channels.

In this application, the fifth channel may be any channel of the non-DFS channels.

It may be understood that in this application, when it is determined that the first terminal device performs the connection to the first wireless access device based on any channel of the non-DFS channels, the configuration of the first terminal device and the configuration of the second terminal device do not need to be determined, and P2P communication between the first terminal device and the second terminal device may be directly established based on the fifth channel. In this way, it can be ensured that a channel for communication between a device of at least one end and a wireless access device is the same as a channel for P2P communication between two terminal devices, to effectively reduce occurrence of a scenario in which the terminal device performs time division switching between different channels, thereby improving channel transmission performance and user experience.

In a possible implementation, the first terminal device is a group owner device, and the second terminal device is a group client device.

In this application, the first terminal device may be a master device group owner (Group Owner, GO), and the second terminal device may be a slave device group client (Group Client, GC).

It may be understood that in this application, when the first terminal device and the second terminal device perform peer-to-peer communication, a role of the GO is similar to a role of the wireless access device, and the GC implements a function of the terminal device. A connection between the GC and the GO is similar to a connection between the terminal device and the wireless router.

According to a second aspect, this application provides an electronic device. The electronic device includes: a memory and a processor, where the memory is configured to store instructions executed by one or more processors of the electronic device, and the processor is one of the one or more processors of the electronic device and is configured to perform the communication method described in this application.

According to a third aspect, this application provides a readable storage medium, where the readable storage medium stores instructions, and the instructions, when executed on an electronic device, cause the electronic device to perform the communication method described in this application.

### BRIEF DESCRIPTION OF DRAWINGS

FIG. 1 is a schematic diagram of a screen projection scenario according to some embodiments of this application;
FIG. 2A is a schematic diagram of a scenario of a single-ended same-frequency different-channel according to some embodiments of this application;
FIG. 2B is a schematic diagram of a first scenario of time division multiplexing by a terminal device according to some embodiments of this application;
FIG. 3A is a schematic diagram of a scenario of a dual-ended same-frequency different-channel according to some embodiments of this application;
FIG. 3B is a schematic diagram of a second scenario of time division multiplexing by a terminal device according to some embodiments of this application;
FIG. 3C is a schematic diagram of a third scenario of time division multiplexing by a terminal device according to some embodiments of this application;
FIG. 4A is a schematic diagram of a first scenario of P2P communication according to some embodiments of this application;
FIG. 4B is a schematic diagram of a second scenario of P2P communication according to some embodiments of this application;
FIG. 5 is a schematic diagram of a structure of hardware of a terminal device according to some embodiments of this application;
FIG. 6 is a first flowchart of establishing a P2P channel according to some embodiments of this application; and
FIG. 7 is a second flowchart of establishing a P2P channel according to some embodiments of this application.

### DESCRIPTION OF EMBODIMENTS

Illustrative embodiments of this application include, but are not limited to, a communication method, an electronic device, and a storage medium.

To make understanding of the solutions of this application more clearly, terms in the art involved in this application are first explained.

A channel is a channel for transmission of a signal in a communication system, and includes a transmission medium through which the signal is transmitted from a transmitting end to a receiving end. Using wireless fidelity (Wireless Fidelity, WiFi) as an example, each frequency band commonly used in Wi-Fi is divided into a plurality of channels. For example, according to an IEEE 802.11 protocol, a 2.4 GHz Wi-Fi frequency band is divided into 13 overlapping channels, where a width of each channel is 22 MHz; and a 5 GHz Wi-Fi frequency band is divided into 201 channels.

P2P is an end-to-end communication technology that performs communication in a peer-to-peer manner and does not distinguish between a client and a server, where resources and services in a network are dispersed on all nodes, and information transmission and service implementation are directly performed between the nodes, without participation of an intermediate link and a server. For example, data transmission between a first terminal device and a second terminal device may be directly performed based on a P2P technology.

Dynamic frequency selection (Dynamic Frequency Selection, DFS) channels, namely, DFS channels, are a plurality of channels having an automatic switching function in a 5 GHz radio frequency band. After a device accesses a DFS channel in the 5 GHz frequency band, when a radar signal is detected in one of the channels, the device may automatically perform switching to another channel to avoid interference of the radar signal.

An application background of the method provided in embodiments of this application is briefly described below.

Currently, there may be some cases that a channel (that is, a station (station, STA) channel) for communication between a terminal device and a wireless router is different from a channel for P2P communication between two terminal devices. Consequently, the terminal device needs to perform time division transmission on two different channels. For example, a time division mode is 25 ms/25 ms time division, and time consumption of switching is 5 ms. This represents that after a terminal device operates in the STA channel for 25 ms, the terminal device performs switching to a P2P channel to perform data transmission with another terminal device, where time consumption of the switching is 5 ms. After the terminal device switches to and operates in the P2P channel for 25 ms, the terminal device performs switching to the STA channel again to communicate with the wireless router. Switching by the terminal device between different channels causes a short time slice for data transmission between the terminal devices. For example, in a screen projection scenario, data can be transmitted until P2P time slices of two terminal devices correspond to each other. Consequently, phenomena such as freezing and delay of a projected picture occur, affecting user experience.

A transmission mode is described below by using a scenario in which a P2P channel and an STA channel of one terminal device are the same, and a P2P channel and an STA channel of another terminal device are different (in other words, single-ended same-frequency different-channels) as an example.

For example, as shown in FIG. 2A, a mobile phone 101 establishes a communication connection to a wireless router 100 based on a dynamic frequency selection (Dynamic Frequency Selection, DFS) channel 60, a tablet 201 establishes the communication connection to a wireless router 200 based on a 5G frequency band 40 channel, and when the mobile phone 101 establishes a P2P communication connection to the tablet 201, an STA channel (the 5G frequency band 40 channel) corresponding to the tablet 201 is selected as a P2P channel.

Because an STA channel and the P2P channel of the mobile phone 101 are different, the mobile phone 101 needs to perform time division switching between the two channels. As shown in FIG. 2B, in a P2P time slice, the mobile phone 101 communicates with the tablet 201 in the P2P channel. In an STA time slice, the mobile phone 101 communicates with the wireless router 100 in a DFS channel 60. The mobile phone 101 needs to perform switching between different channels, and switching of the channels is time-consuming. Consequently, operation time for P2P data transmission with the tablet 201 is excessively short, causing phenomena such as freezing and timeout, and affecting user experience.

A transmission mode is described below by using a scenario in which P2P channels and STA channels of two terminal devices each are different (that is, dual-ended same-frequency different-channels) as an example.

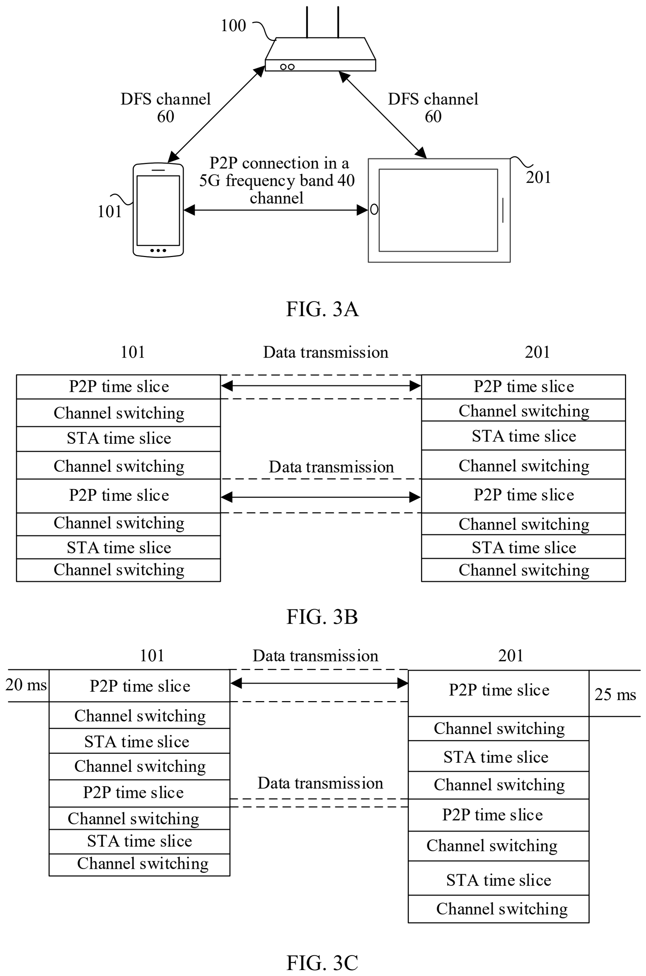

For example, as shown in FIG. 3A, a mobile phone 101 and a tablet 201 each establish a communication connection to a wireless router 100 in a DFS channel 60, and data transmission between the mobile phone 101 and the tablet 201 is performed in a P2P channel (a 5G frequency band 40 channel). Because the STA channels and the P2P channels of the mobile phone 101 and the tablet 201 each are same-frequency different-channels, time division switching needs to be performed between the two channels simultaneously. As shown in FIG. 3B, in a P2P time slice, the mobile phone 101 communicates with the tablet 201 in the P2P channel. In an STA time slice, the mobile phone 101 communicates with the wireless router 100 in the DFS channel, and the tablet 201 communicates with the wireless router 100 in the DFS channel. It can be learned from FIG. 3B that, when the mobile phone 101 communicates with the tablet 201, operation time for P2P is excessively short, causing phenomena such as freezing and timeout.

In some embodiments, for the mobile phone 101 and the tablet 201, time for a configuration of the P2P time slice, time for channel switching, and time for a configuration of the STA time slice may be different. Consequently, during P2P communication, P2P time slices may not completely correspond to each other. For example, as shown in FIG. 3C, when the mobile phone 101 uses 20 ms/20 ms time division, and the tablet 201 uses 25 ms/25 ms time division. Because time division time slices of the mobile phone 101 and the tablet 201 are different, only in extremely short time can the two terminal devices simultaneously perform switching to the P2P channel, causing shorter time for transmitting data in the P2P channel. Consequently, phenomena such freezing, blurring pictures, video frame loss, and timeout are more serious, affecting user experience.

To resolve the foregoing problem, embodiments of this application provide a communication method. When a local device (for example, a first terminal device) prepares to establish a P2P connection to a peer device (for example, a second terminal device), and when the local device has accessed a wireless network based on a first channel, a P2P channel between the two terminal devices may be established based on the foregoing first channel accessing the network. For example, the local device may send request information for establishing the P2P channel to the peer device. The request information may include information about the foregoing first channel accessing the network, to establish the P2P channel between the two terminal devices based on the foregoing first channel accessing the network. In this way, it can be ensured that an STA channel and the P2P channel of a device of at least one end are the same, to effectively reduce occurrence of a scenario in which the terminal device performs time division switching between different channels, increase time for transmitting data in the P2P channel, and avoid a phenomenon like picture freezing, thereby improving user experience.

In some embodiments, if the foregoing first channel is any channel of DFS channels, that is, when the local device has accessed the wireless network based on any channel of the DFS channels, because not all devices support establishing P2P communication in a DFS channel, when it is determined that the local device accesses the wireless network based on any channel of the DFS channels, it may be determined whether both a configuration of the local device and a configuration of the peer device support establishing P2P communication in the DFS channel. When it is determined that both the configuration of the local device and the configuration of the peer device support establishing P2P communication in the DFS channel, the P2P channel between the two terminal devices may be established based on the foregoing DFS channel accessing the network.

It may be understood that, in some embodiments, the foregoing local device and peer device may be configured with, at a framework layer in software architecture, a software program configured to implement establishment of P2P communication in the DFS channel and the like, to support the terminal device in establishing P2P communication in the DFS channel. The local device may send a request to the peer device in a near field communication mode like Bluetooth or a near field communication (near field communication, NFC) technology, to obtain whether the peer device supports establishing P2P communication in the DFS channel.

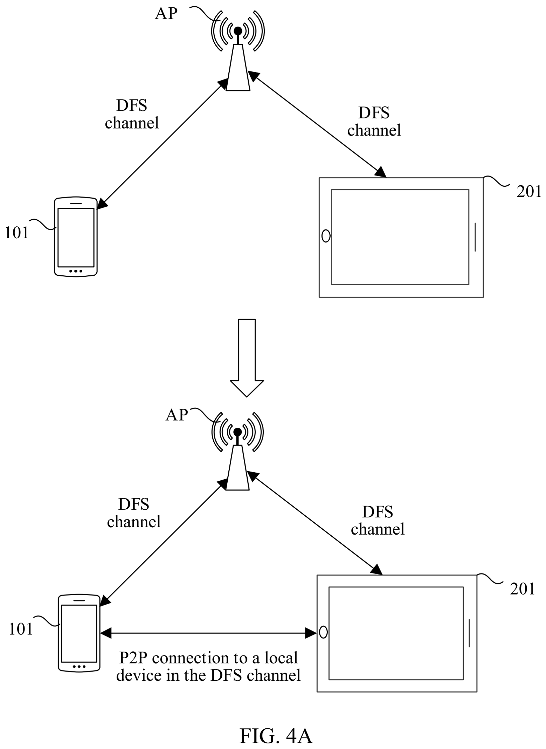

In some embodiments, as shown in FIG. 4A, an example in which the local device is a mobile phone 101 and the peer device is a tablet 201 is used. If the mobile phone 101 performs a connection to a wireless access point (Access Point, AP) based on any channel of the DFS channels to access a wireless network, and both a chip of the mobile phone 101 and a chip of the tablet 201 support a DFS channel to establish P2P communication, the DFS channel of the mobile phone 101 may be added to a P2P channel list, and a P2P channel is established in the DFS channel of the mobile phone 101, so that an STA channel and the P2P channel of the mobile phone 101 are the same, to avoid that a device of at least one end performs time division switching between a P2P channel and a DFS channel, and reduce an abnormality of data transmission in the P2P channel, thereby improving user experience.

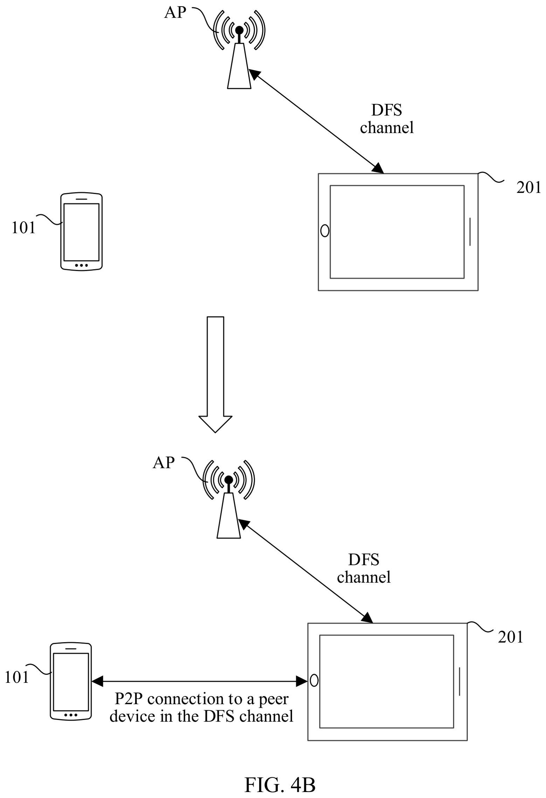

In some embodiments, as shown in FIG. 4B, an example in which the local device is a mobile phone 101, and the peer device is a tablet 201 is used. If the mobile phone 101 does not access a wireless network, the mobile phone 101 determines that the tablet 201 performs a connection to an AP in any channel of the DFS channels to access the wireless network, and both a chip of the mobile phone 101 and a chip of the tablet 201 support establishing P2P communication in the DFS channel, the DFS channel of the tablet 201 may be added to a P2P channel list, and a P2P channel is established in the DFS channel of the peer device. In this way, the local device is in single-channel communication, and the P2P channel and the DFS channel of the peer device are same-frequency same-channels, to avoid that the local device and the peer device perform time division switching between different channels, and effectively reduce occurrence of a scenario of time division multiplexing, thereby improving channel transmission performance and user experience.

In some embodiments, if the local device has accessed the wireless network based on any channel of the DFS channels, but a chip of the local or peer electronic device does not support establishing P2P communication in the DFS channel, in this case, if the peer device accesses the wireless network based on the DFS channel, or the peer device does not access the wireless network, another channel (for example, a 149 channel configured by a system by default) may be used as a P2P channel to establish a P2P communication connection. If the peer device accesses the wireless network through a connection to a non-DFS channel, the channel of the peer device may be used as the P2P channel to establish the communication connection between the local device and the peer device.

In some embodiments, if the local device establishes wireless communication with an AP in a non-DFS channel, when the two terminal devices transmit data by using a P2P function, the non-DFS channel in which the local device establishes wireless communication with the AP may be added to a P2P channel list, and the channel of the local device is used as a P2P channel to establish a P2P communication connection.

In some embodiments, if the local device does not access the wireless network, and the local device determines that the peer device performs a connection to a wireless access point in a non-DFS channel to access the wireless network, the channel of the peer device may be used as a P2P channel to establish a P2P communication connection between the local device and the peer device.

In some embodiments, if the local device does not access the wireless network, and it is determined that the peer device performs a connection to a wireless access point in a DFS channel to access the wireless network, but a chip of the local or peer device electronic device does not support establishing P2P communication in the DFS channel, any other channel (for example, a 149 channel configured by a system by default) may be used as a P2P channel to establish a P2P communication connection between the local device and the peer device.

In some embodiments, if both the local device and the peer device do not access the wireless network, any other channel (for example, a 149 channel configured by a system by default) may be used as a P2P channel to establish a P2P communication connection between the local device and the peer device.

In this way, according to the method in this application, an abnormality of data transmission in P2P communication can be reduced, thereby improving performance of P2P communication and user experience.

In some embodiments, before devices of two ends establish the P2P channel, device discovery generally needs to be performed. For example, in an application scenario of screen projection shown in FIG. 1, when mobile phone screen projection of the mobile phone 101 is enabled, the mobile phone 101 may send a request frame, and after the personal computer 102 receives the request frame sent by the mobile phone, the personal computer 102 returns a response frame to the mobile phone. In this way, mutual discovery between the mobile phone 101 and the personal computer 102 is completed. In some embodiments, the request frame and the response frame may carry indication information, for indicating that a P2P connection needs to be established to complete screen projection, so that establishment of the P2P connection is triggered, and the like.

In some embodiments, in a device discovery process, a device used as a slave device group client (Group Client, GC) and a device used as a master device group owner (Group Owner, GO) may be further determined in a preset manner or a bilateral negotiation manner. For example, the preset manner may include: A large screen device is preset as the GO, alternatively, a terminal device that can support more functions is preset as the GO. This is not specifically limited in embodiments of this application. For example, in an application scenario of multi-screen collaboration, a personal computer (personal computer, PC) or a tablet computer is generally used as the GO. In an application scenario of mirroring projection, a large screen device is generally used as the GO. In an application scenario of file sharing, a sending end is generally used as the GO. This is not specifically limited in embodiments of this application.

In some embodiments, the local device described in this application may be a GO device, and the peer device is a GC device, to perform the foregoing steps of determining the P2P channel. In a P2P mode, a role of the GO is similar to a role of the wireless access point AP, and the GC implements a function of the terminal device. A connection between the GC and the GO is similar to a connection between the terminal device and the wireless router.

Before the communication method provided in embodiments of this application is described in detail, the terminal device described in embodiments of this application is first described. It may be understood that, the terminal device in embodiments of this application may be any electronic device like a mobile phone, a computer, a virtual reality (virtual reality, VR) device, a tablet computer, a wearable device, an augmented reality (augmented reality, AR) device, or a notebook computer. A form of the terminal device is not specifically limited in embodiments of this application.

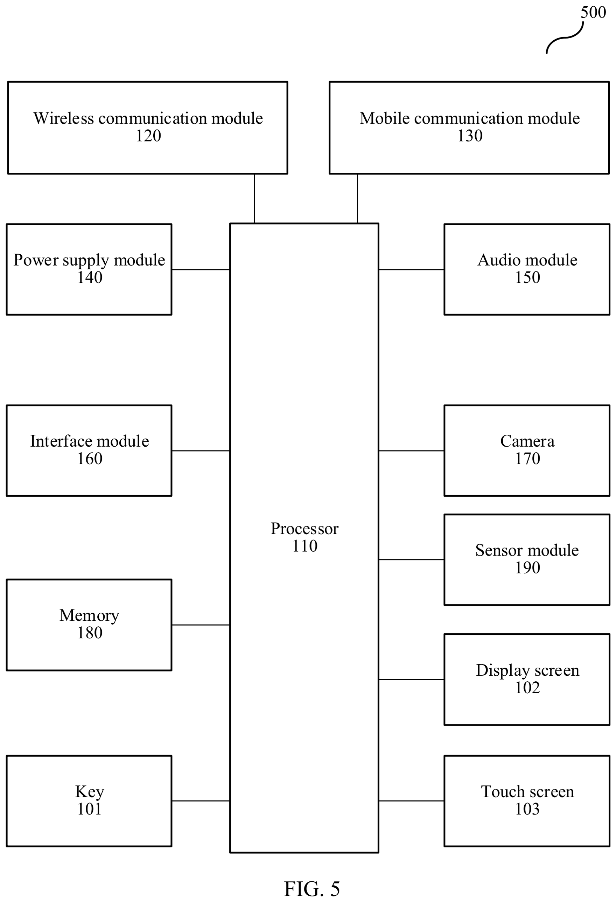

As shown in FIG. 5, FIG. 5 describes an example of a schematic diagram of a structure of hardware of an electronic device 500 according to an embodiment of this application. As shown in FIG. 5, the electronic device 500 may include a processor 110 (or referred to as a host), a power supply module 140, a memory 180, a mobile communication module 130, a wireless communication module 120, a sensor module 190, an audio module 150, a camera 170, an interface module 160, a key 101, a display screen 102, a touch screen 103, and the like.

It may be understood that, the schematic structure in embodiments of this application does not constitute a limitation to the only possible implementation of the electronic device 500. In some other embodiments of this application, the electronic device 500 may include more or fewer components than those shown in the figure, some components may be combined, some components may be split, or a different part arrangement may be used. The components shown in the figure may be implemented by hardware, software, or a combination of software and hardware.

The processor 110 may include one or more processing units, for example, may include a processing module or a processing circuit like a central processing unit (Central Processing Unit, CPU), a graphics processing unit (Graphics Processing Unit, GPU), a digital signal processor, a micro-programmed control unit (Micro-programmed Control Unit, MCU), an artificial intelligence (Artificial Intelligence, AI) processor, or a field programmable gate array (Field Programmable Gate Array, FPGA). Different processing units may be independent devices, or may be integrated into one or more processors. The processor 110 may be further provided with a storage unit configured to store instructions and data. In some embodiments, the storage unit in the processor 110 is a cache 180, and the storage unit may store instructions or data recently used or cyclically used by the processor 110. If the processor 110 needs to use the instructions or data again, the instructions or data may be directly called from the storage unit. This avoids repeated access and reduces waiting time of the processor 110, thereby improving efficiency of a system.

A controller may generate an operation control signal based on an instruction operation code and a sequence signal, to complete control of instruction fetching and instruction execution.

It may be understood that in this embodiment of this application, the processor may be configured to perform method steps performed by the first terminal device or the second terminal device in the communication method of this application.

The power supply module 140 may include a power supply, a power management component, and the like. The power supply may be a battery. The power management component is configured to manage charging of the power supply, and supply power from the power supply to another module. In some embodiments, the power management component includes a charging management module and a power management module. The charging management module is configured to receive a charging input from a charger; and the power management module is configured to connect the power supply, and the charging management module is connected to the processor 110. The power management module receives an input from the power supply and/or the charging management module, to supply power to the processor 110, the display screen 102, the camera 170, the wireless communication module 120, and the like.

The mobile communication module 130 may include, but is not limited to an antenna, a power amplifier, a filter, a low noise amplifier (Low noise amplify, LNA), and the like. The mobile communication module 130 may provide a solution applied to the electronic device 500 for wireless communication including 2G/3G/4G/5G and the like. The mobile communication module 130 may receive an electromagnetic wave through the antenna, perform processing such as filtering or amplification on the received electromagnetic wave, and transmit the processed electromagnetic wave to a modem processor for demodulation. The mobile communication module 130 may further amplify a signal modulated by the modem processor, and convert the signal into the electromagnetic wave through the antenna for radiation. In some embodiments, at least some functional modules of the mobile communication module 130 may be arranged in the processor 110. In some embodiments, at least some functional modules of the mobile communication module 130 and at least some modules of the processor 110 may be arranged in a same device.

The wireless communication module 120 may include the antenna, and send and receive the electromagnetic wave through the antenna. The wireless communication module 120 may provide a solution applied to the electronic device 500 for wireless communication, including a wireless local area network (wireless localarea networks, WLAN) (like a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The electronic device 500 may communicate with a network and another device by using a wireless communication technology.

In some embodiments, the mobile communication module 130 and the wireless communication module 120 of the electronic device 500 may alternatively be located in a same module.

The display screen 102 is configure to display a human-computer interaction interface, an image, a video, and the like. The display screen 102 includes a display panel. The display panel may be a liquid crystal display (liquid crystal display, LCD), an organic light-emitting diode (organic light emitting diode, OLED), an active-matrix organic light-emitting diode (active-matrix organic light emitting diode, AMOLED), a flexible light-emitting diode (flex light-emitting diode, FLED), a quantum dot light-emitting diode (quantum dot light emitting diodes, QLED), or the like.

The sensor module 190 may include an optical proximity sensor, a pressure sensor, a gyroscope sensor, a barometric pressure sensor, a magnetic sensor, an acceleration sensor, a distance sensor, a fingerprint sensor, a temperature sensor, a touch sensor, an ambient light sensor, a bone conduction sensor, an electromagnetic wave absorptivity sensor, a sound sensor, and the like.

The audio module 150 is configured to convert a digital audio signal into an analog audio signal output, or convert an analog audio input into the digital audio signal. The audio module 150 may be further configured to encode and decode an audio signal. In some embodiments, the audio module 150 may be arranged in the processor 110, or some functional modules of the audio module 150 are arranged in the processor 110. In some embodiments, the audio module 150 may include a speaker, a receiver, a microphone, and a headset jack.

The camera 170 is configured to capture a static image or a video. An optical image is generated for an object through a lens and is projected onto a photosensitive element. The photosensitive element converts an optical signal into an electrical signal, and then transfers the electrical signal to image signal processing (Image Signal Processing, ISP), to convert the electrical signal into a digital image signal. The electronic device 500 can implement a photographing function by using the ISP, the camera 170, a video codec, a graphic processing unit (Graphic Processing Unit, GPU), the display screen 102, an application processor, and the like.

The interface module 160 includes an external memory interface, a universal serial bus (universal serial bus, USB) interface, and the like. The external memory interface may be configured to connect to an external storage card, for example, a Micro SD card, to expand a storage capability of the electronic device 500. The external storage card communicates with the processor 110 through the external memory interface, to implement a data storage function. The universal serial bus interface is configured to cause the electronic device 500 to communicate with another electronic device.

In some embodiments, the electronic device 500 further includes the key 101, a motor, an indicator, and the like. The key 101 may include a volume key, an on/off key, and the like. The motor is configured to cause the electronic device 500 to generate a vibration effect. Different application scenarios (for example, time reminding, receiving information, an alarm, and a game) may correspond to different vibration feedback effects. The indicator may include a laser indicator, a radio frequency indicator, a light-emitting diode (light emitting diode, LED) indicator, and the like.

The communication method in embodiments of this application is described in detail below based on the foregoing terminal device described in embodiments of this application.

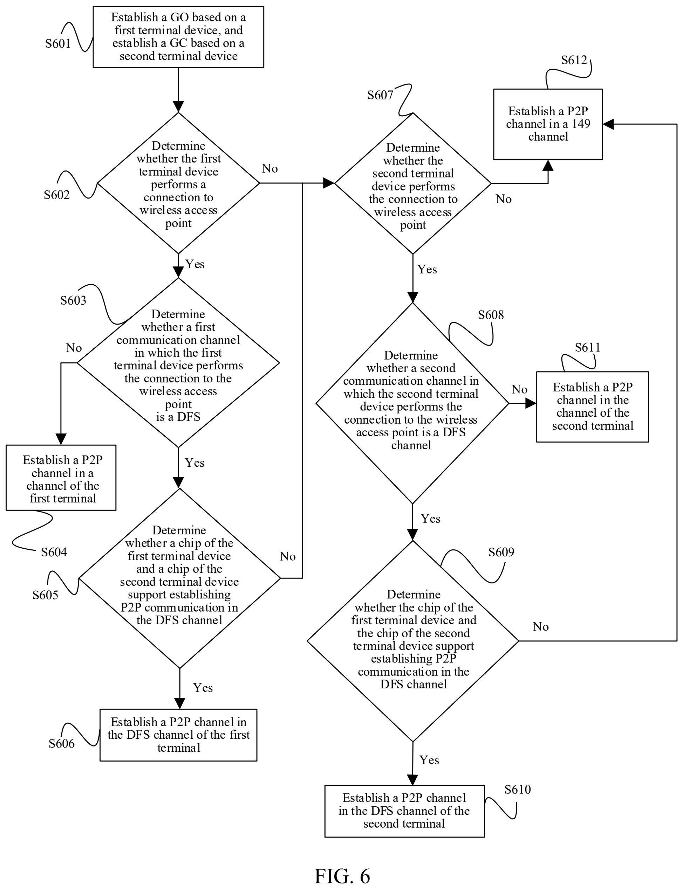

The communication method in this application is described in detail based on a schematic flowchart shown in FIG. 6. Specifically, the method includes the following steps:

S601: Establish a GO based on a first terminal device, and establish a GC based on a second terminal device.

It may be understood that in this embodiment of this application, when terminal devices share computing resources and services, data information may be directly transmitted by using a P2P technology, for example, screen projection, multi-device collaboration, or face-to-face quick transmission. When a terminal device performs a P2P communication connection, the terminal device may scan and search for a peer device. The two devices perform a negotiation to determine a GO end and a GC end. In a P2P mode, a role of the GO is similar to a role of a wireless access point AP, and the GC implements a function of the terminal device. A connection between the GC and the GO is similar to a connection between the terminal device and the wireless router.

In some embodiments, the terminal device may scan and search for the peer device by using Bluetooth, a near field communication (near field communication, NFC) technology, or the like, to initiate a P2P communication request to the peer device. For example, after a Bluetooth function is enabled, the terminal device may discover the peer device by using the Bluetooth, and initiate the P2P communication request to the peer device. For another example, an NFC function of the terminal device is enabled. After a user holds the terminal device to make an NFC area touched, the terminal device may initiate the P2P communication request to the other party. This is not specifically limited in embodiments of this application.

In some embodiments, the two devices may perform a negotiation according to a preset rule, to determine the GO end and the GC end. For example, the preset rule may include: A large screen device is preset as the GO, or a terminal device that can support more functions is preset as the GO. This is not specifically limited in embodiments of this application. For example, in an application scenario of multi-screen collaboration, a personal computer (personal computer, PC) or a tablet computer is generally used as the GO. In an application scenario of mirroring projection, a large screen device is generally used as the GO. In an application scenario of file sharing, a sending end is generally used as the GO. This is not specifically limited in embodiments of this application.

In this application, the following procedure is described by using an example in which the first terminal device is a GO device, and the second terminal device is a GC device.

S602: Determine whether the first terminal device performs a connection to the wireless access point. If the first terminal device performs the connection to the wireless access point, S603 is performed. If the first terminal device performs no connection to the wireless access point, S607 is performed.

It may be understood that in this embodiment of this application, when the first terminal device and the second terminal device establish a P2P connection channel, it needs to be determined whether the first terminal device has accessed a wireless network, for example, the first terminal device accesses the wireless network through a connection to the wireless router. If the first terminal device has accessed the wireless network, S603 is performed to determine whether a first communication channel in which the first terminal device performs the connection to the wireless access point is a DFS channel. If the first terminal device performs no connection to the wireless access point, S607 is performed to determine whether the second terminal device accesses the wireless network through a connection to the wireless router.

In some embodiments, if the first terminal device has established a communication connection to the wireless router through a channel, and the first terminal device and the second terminal device establish P2P communication based on another channel, the first terminal device needs to perform switching between different channels. In this case, a time division switching scenario as shown in FIG. 2B occurs, and time consumption of is long, resulting in a reduction in a data transmission capability during P2P communication reduces, causing phenomena such as freezing and timeout, and affecting user experience.

S603: Determine whether the first communication channel in which the first terminal device performs the connection to the wireless access point is a DFS. If the first communication channel in which the first terminal device performs the connection to the wireless access point is the DFS channel, S605 is performed. If the first communication channel in which the first terminal device performs the connection to the wireless access point is not the DFS channel, S604 is performed.

It may be understood that in this embodiment of this application, when it is determined that the first terminal device accesses the wireless network, a first terminal device system needs to determine whether the first terminal device performs a connection to the DFS channel. If the first terminal device accesses the wireless network through a connection to any channel of DFS channels, S605 is performed to determine whether an electronic device chip supports establishing P2P communication in the DFS channel. If the first terminal device performs no connection to the DFS channel, that is, the first terminal device accesses the wireless network in any other non-DFS channel, S604 is performed to establish a P2P channel in a channel of the first terminal device.

S604: Establish the P2P channel in a channel of a first terminal.

It may be understood that in this embodiment of this application, after the first terminal device system determines that the first terminal device accesses the wireless network in the non-DFS channel, the channel of the first terminal device is added to a P2P channel list that is optional for the first terminal device and the second terminal device, and the P2P channel is established in an STA communication channel of the first terminal device.

In this way, the P2P channel and the STA channel of the first terminal device are same-frequency same-channels, to avoid that the first terminal device performs time division switching between different channels, thereby effectively improving performance of P2P communication and user experience.

S605: Determine whether a chip of the first terminal device and a chip of the second terminal device support establishing P2P communication in the DFS channel. If the chip of the first terminal device and the chip of the second terminal device support establishing P2P communication in the DFS channel, S606 is performed. If the chip of the first terminal device and the chip of the second terminal device do not support establishing P2P communication in the DFS channel, S607 is performed.

It may be understood that in this embodiment of this application, when it is determined that the first terminal device establishes the connection to the wireless router in any channel of the DFS channels, it needs to be determined whether an electronic device chip of the first terminal device and an electronic device chip of the second terminal device support establishing P2P communication in the DFS channel. If the electronic device chip of the first terminal device and the electronic device chip of the second terminal device support establishing P2P communication in the DFS channel, S606 is performed to establish a P2P channel in the DFS channel of the first terminal device. If the electronic device chip of the first terminal device and the electronic device chip of the second terminal device do not support establishing P2P communication in the DFS channel, S607 is performed to determine whether the second terminal device accesses the wireless network. In some embodiments, chips of some terminal devices support establishing P2P communication in the DFS channel. For example, a software architecture corresponding to a chip of a mobile phone or a chip corresponding to a tablet, for example, a framework (Framework, FWK) layer of the terminal device, may be configured with a corresponding program or function, to implement supporting establishing P2P communication in the DFS channel. This is not limited in embodiments of this application.

S606: Establish the P2P channel in the DFS channel of the first terminal.

It may be understood that in this embodiment of this application, when it is determined that the first terminal device establishes the connection to the wireless router in any channel of the DFS channels, and the electronic device chip of the first terminal device and the electronic device chip of the second terminal device support establishing P2P communication in the DFS channel, the DFS channel of the first terminal device may be added to a P2P channel list, and the P2P channel is established in the DFS channel of the first terminal device.

In this way, a P2P channel and an STA channel of a terminal device of at least one end in the first terminal device and the second terminal device are same-frequency same-channels, to effectively reduce a scenario in which the terminal device performs time division switching between different channels, thereby improving performance of P2P communication and user experience.

S607: Determine whether the second terminal device performs the connection to the wireless access point. If the second terminal device performs the connection to the wireless access point, S608 is performed. If the second terminal device performs no connection to the wireless access point, S612 is performed.

It may be understood that in this embodiment of this application, when it is determined that the first terminal device does not access the wireless network, or when it is determined that the first terminal device establishes the connection to the wireless router in any channel of the DFS channels, but the electronic device chip of the first terminal device or the electronic device chip of the second terminal device does not support establishing P2P communication in the DFS channel, it needs to be determined whether the second terminal device has accessed the wireless network, for example, the second terminal device accesses the wireless network through the connection to the wireless router. If the second terminal device has accessed the wireless network, S608 is performed to determine whether the second terminal device performs a connection to the DFS channel. If the second terminal device performs no connection to the wireless network, S612 is performed to establish a P2P channel in a 149 channel.

S608: Determine whether a second communication channel in which the second terminal device performs the connection to the wireless access point is the DFS channel. If the second communication channel in which the second terminal device performs the connection to the wireless access point is the DFS channel, S609 is performed. If the second communication channel in which the second terminal device performs the connection to the wireless access point is not the DFS channel, S611 is performed.

It may be understood that in this embodiment of this application, when it is determined that the second terminal device accesses the wireless network, the first terminal device needs to determine whether the second terminal device performs the connection to the DFS channel. If the second terminal device accesses the wireless network through the connection to any channel of the DFS channels, S609 is performed to determine whether an electronic device chip supports establishing P2P communication in the DFS channel. If the second terminal device performs no connection to the DFS channel, that is, the second terminal device accesses the wireless network in any other non-DFS channel, S611 is performed to establish a P2P channel in a channel of the second terminal device.

S609: Determine whether the chip of the first terminal device and the chip of the second terminal device support establishing P2P communication in the DFS channel. If the chip of the first terminal device and the chip of the second terminal device support establishing P2P communication in the DFS channel, S610 is performed. If the chip of the first terminal device and the chip of the second terminal device do not support establishing P2P communication in the DFS channel, S612 is performed.

It may be understood that in this embodiment of this application, when it is determined that the second terminal device establishes the connection to the wireless router in any channel of the DFS channels, it needs to be determined whether the electronic device chip of the first terminal device and the electronic device chip of the second terminal device support establishing P2P communication in the DFS channel. If the electronic device chip of the first terminal device and the electronic device chip of the second terminal device support establishing P2P communication in the DFS channel, S610 is performed to establish a P2P channel in the DFS channel of the second terminal device. If the electronic device chip of the first terminal device and the electronic device chip of the second terminal device do not support establishing P2P communication in the DFS channel, S612 is performed to establish a P2P channel in any other non-DFS channel (for example, a 149 channel configured by a system by default). In some embodiments, chips of some terminal devices support establishing P2P communication in the DFS channel. This is not limited in embodiments of this application.

S610: Establish the P2P channel in the DFS channel of the second terminal.

It may be understood that in this embodiment of this application, when it is determined that the first terminal device does not access the wireless network, the second terminal device establishes the connection to the wireless router in any channel of the DFS channels, and the electronic device chip of the first terminal device and the electronic device chip of the second terminal device support establishing P2P communication in the DFS channel, the DFS channel of the second terminal device may be added to a P2P channel list, and the P2P channel is established in the DFS channel of the second terminal device.

S611: Establish the P2P channel in a channel of the second terminal.

It may be understood that in this embodiment of this application, when the first terminal device system determines that the first terminal device does not access the wireless network, and it is determined that the second terminal device accesses the wireless network in the non-DFS channel, the channel of the second terminal device may be added to a P2P channel list that is optional for the GO and the GC, and the P2P channel is established in an STA communication channel of the second terminal device.

It may be understood that in this embodiment of this application, when the first terminal device system determines that the first terminal device establishes the connection to the wireless router in any channel of the DFS channels, but the electronic device chip of the first terminal device or the electronic device chip of the second terminal device does not support establishing P2P communication in the DFS channel, and the first terminal device determines that the second terminal device accesses the wireless network in the non-DFS channel, the channel of the second terminal device may be added to the P2P channel list that is optional for the GO and the GC, and the P2P channel is established in the STA communication channel of the second terminal device.

S612: Establish the P2P channel in the 149 channel.

It may be understood that in this embodiment of this application, when it is determined that both the first terminal device and the second terminal device perform no connection to the wireless access point, the P2P channel may be established in any other channel (for example, the 149 channel configured by the system by default). This is not limited in embodiments of this application.

In some embodiments, if it is determined that both the first terminal device and the second terminal device establish the connection to the wireless router in any channel of the DFS channels, but the electronic device chip of the first terminal device or the electronic device chip of the second terminal device does not support establishing P2P communication in the DFS channel, the P2P channel may be established in any other channel (for example, the 149 channel configured by the system by default). This is not limited in embodiments of this application.

In some embodiments, when the first terminal device system determines that the first terminal device establishes the connection to the wireless router in any channel of the DFS channels, but the electronic device chip of the first terminal device or the electronic device chip of the second terminal device does not support establishing P2P communication in the DFS channel, and it is determined that the second terminal device performs no connection to the wireless access point, the P2P channel may be established in on any other channel (for example, the 149 channel configured by the system by default). This is not limited in embodiments of this application.

In some embodiments, if the first terminal device system determines that the first terminal device performs no connection to the wireless access point, and it is determined that the second terminal device establishes the connection to the wireless router in any channel of the DFS channels, but the electronic device chip of the first terminal device or the electronic device chip of the second terminal device does not support establishing P2P communication in the DFS channel, the P2P channel may be established in any other channel (for example, the 149 channel configured by the system by default). This is not limited in embodiments of this application.

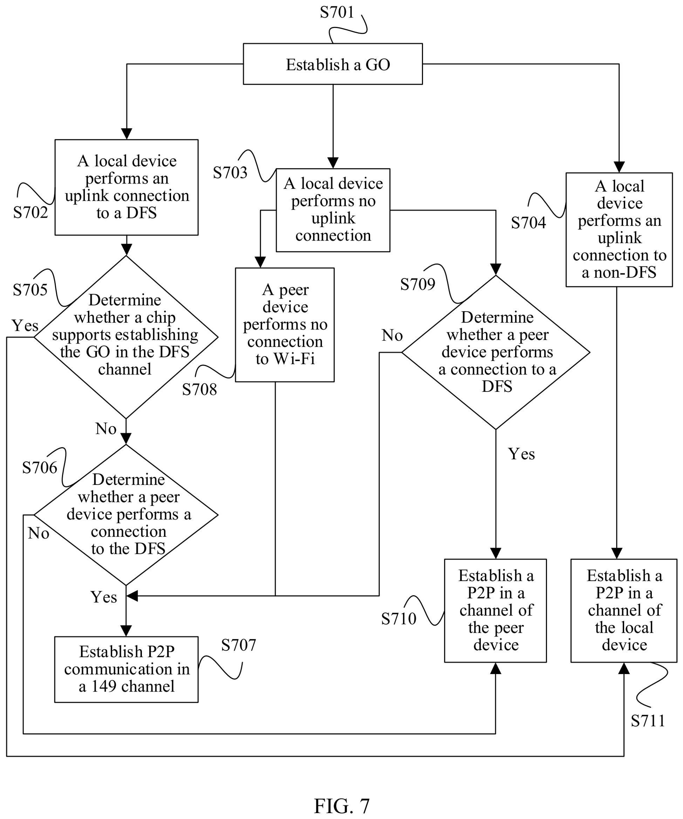

For ease of description, an example in which a local device is a GO device, a peer device is a GC device, and a wireless access point is a wireless router is used. FIG. 7 is a specific schematic flowchart of establishing a P2P channel according to an embodiment of this application. Specifically, the method includes the following steps:

S701: Establish a GO.

It may be understood that in this embodiment of this application, after the local device scans and discovers the peer device, the two terminal devices may perform a negotiation according to a preset rule, to determine a GO end and a GC end. This is not specifically limited in embodiments of this application. For a specific establishment manner, refer to descriptions in step S601.

S702: The local device performs an uplink connection to a DFS.

It may be understood that in this embodiment of this application, a GO end device may establish a communication connection to the wireless router based on the DFS channel.

S703: The local device performs no uplink connection.

It may be understood that in this embodiment of this application, a GO end device may detect that the local device does not access a wireless network.

S704: The local device performs an uplink connection to a non-DFS.

It may be understood that in this embodiment of this application, a GO end device may detects that the local device establishes a communication connection to the wireless router based on any other non-DFS channel.

S705: Determine whether a chip supports establishing the GO in the DFS channel. If the chip supports establishing the GO in the DFS channel, S711 is performed. If the chip does not support establishing the GO in the DFS channel, S706 is performed.

It may be understood that in this embodiment of this application, when it is determined that the GO end device establishes the connection to the wireless router in any channel of DFS channels, it needs to be determined whether an electronic device chip supports establishing P2P communication in the DFS channel. If the electronic device chip supports establishing P2P communication in the DFS channel, S711 is performed to establish a P2P channel in the channel of the local device, that is, the GO end device. If the electronic device chip does not support establishing P2P communication in the DFS channel, S706 is performed to determine whether the peer device performs a connection to a DFS.

S706: Determine whether the peer device performs a connection to the DFS. If the peer device performs a connection to the DFS channel, S707 is performed. If the peer device performs no connection to the DFS channel, S710 is performed.

It may be understood that in this embodiment of this application, when it is determined that the GO end device establishes the connection to the wireless router in any channel of the DFS channels, but the electronic device chip does not support establishing P2P communication in the DFS channel, it needs to be determined whether the peer device, that is, a GC end device, performs the connection to the DFS channel. If the peer device performs the connection to the DFS channel, S707 is performed to establish P2P communication in a 149 channel. If the peer device performs no connection to the DFS channel, S710 is performed to establish a P2P in the channel of the peer device.

S707: Establish P2P communication in the 149 channel.

It may be understood that in this embodiment of this application, when it is determined that both the GO end device and the GC end device perform no connection to the wireless access point, a P2P channel may be established in any other channel (for example, the 149 channel configured by a system by default). This is not limited in embodiments of this application.

In some embodiments, when it is determined that both the GO end device and the GC end device establish the connection to the wireless router in any channel of the DFS channels, but an electronic device chip of the GO end or an electronic device chip of the GC end does not support establishing P2P communication in the DFS channel, the P2P channel may be established in any other channel (for example, the 149 channel configured by the system by default). This is not limited in embodiments of this application.

In some embodiments, if a GO end device system determines that the GO end device performs no connection to the wireless access point, and it is determined that the GC end device establishes the connection to the wireless router in any channel of the DFS channels, but the electronic device chip of the GO end or the electronic device chip of the GC end does not support establishing P2P communication in the DFS channel, the P2P channel may be established in any other channel (for example, the 149 channel configured by the system by default). This is not limited in embodiments of this application.

S708: The peer device performs no connection to Wi-Fi.

It may be understood that in this embodiment of this application, the GO end device may detect that the peer device does not access the wireless network.

S709: Determine whether the peer device performs a connection to a DFS. If the peer device performs the connection to the DFS channel, S710 is performed. If the peer device performs no connection to the DFS channel, S707 is performed.

It may be understood that in this embodiment of this application, when it is determined that the first terminal device does not access the wireless network, it needs to be determined whether the peer device, that is, the GC end device, performs the connection to the DFS channel. If the peer device performs the connection to the DFS channel, S710 is performed to establish P2P in the channel of the peer device. If the peer device performs no connection to the DFS channel, S707 is performed to establish P2P communication in a 149 channel.

S710: Establish the P2P in the channel of the peer device.

It may be understood that in this embodiment of this application, when it is determined that the GO end device does not access the wireless network, and the GC end device establishes the connection to the wireless router in any channel of the DFS channels, the P2P channel is established in the channel of the peer device, that is, the GC end device.

In some embodiments, when the GO end device system determines that the GO end device establishes the connection to the wireless router in any channel of the DFS channels, but the electronic device chip does not support establishing P2P communication in the DFS channel, and the peer device, that is, the GC end device, accesses the wireless network in a non-DFS channel, the P2P channel may be established in the channel of the GC end.

S711: Establish a P2P in the channel of the local device.

It may be understood that in this embodiment of this application, when it is determined that the GO end device establishes the connection to the wireless router in any channel of the DFS channels, and the electronic device chip supports establishing P2P communication in the DFS channel, the DFS channel of the GO end may be added to a P2P channel list, and a P2P channel is established in the DFS channel of the GO end.

It may be understood that in this embodiment of this application, when the GO end device system determines that the GO end device accesses the wireless network through the non-DFS channel, the P2P channel is established in the channel of the GO end.

In this way, according to the foregoing procedure, occurrence of a scenario in which a terminal device performs time division switching between different channels is effectively reduced, thereby improving channel transmission performance and user experience.

This application provides an electronic device. The electronic device includes: a memory and a processor, where the memory is configured to store instructions executed by one or more processors of the electronic device, and the processor is one of the one or more processors of the electronic device and is configured to perform the communication method described in this application.

This application provides a readable storage medium, where the readable storage medium stores instructions, and the instructions, when executed on an electronic device, cause the electronic device to perform the communication method described in this application.

Embodiments disclosed in this application may be implemented in hardware, software, firmware, or a combination of the implementation methods. Embodiments of this application may be implemented as computer program or program code executed on a programmable system. The programmable system includes at least one processor, a storage system (including a volatile memory and a non-volatile memory, and/or a storage element), at least one input device, and at least one output device.

The program code may be applied to an input instruction to perform various functions described in this application and generate output information. The output information may be applied to one or more output devices in a known way. For the purpose of this application, a processing system includes any system having a processor, for example, a digital signal processor, a microcontroller, an application specific integrated circuit, or a microprocessor.

The program code may be implemented by using an advanced programming language or an object-oriented programming language, to facilitate communication with the processing system. When required, the program code may alternatively be implemented by using an assembly language or a machine language. In fact, the mechanism described in this application is not limited to the scope of any specific programming language. In any case, the language may be a compilation language or an interpretation language.

In some cases, the disclosed embodiments may be implemented by hardware, firmware, software, or any combination thereof. The disclosed embodiments may also be implemented as instructions carried or stored thereon by one or more temporary or non-transitory machine-readable (for example, computer-readable) storage media, which may be read and executed by one or more processors. For example, the instructions may be delivered through a network or another computer-readable medium. Therefore, the machine-readable medium may include any mechanism used for storing or transmitting information in a machine (for example, computer)-readable form, including, but not limited to, a floppy disk, an optical disc, an optical disk, a magnetic optical disc, a read-only memory (Read-Only Memory, ROM), a random access memory (Random Access Memory, RAM), a magnetic card or an optical card, a flash memory, an electrically-erasable programmable read-only memory (Electrically-Erasable Programmable Read-Only Memory, EEPROM), or a tangible machine-readable memory configured to transmit information (such as a carrier, an infrared signal, and a digital signal) over the Internet by using a propagation signal in a form of electricity, light, sound, or another form. Therefore, the machine-readable medium includes any type of machine-readable medium suitable for storing or transmitting electronic instructions or information in the machine (for example, computer)-readable form.

In the accompanying drawings, some structure or method features may be shown in a particular arrangement and/or order. However, it should be understood that such a specific arrangement and/or order may not be needed. Instead, in some embodiments, the features may be arranged in a manner and/or order different from that shown in the illustrative accompanying drawings. In addition, inclusion of the structure or method features in a particular figure does not imply that all embodiments need to include the features. In some embodiments, the features may not be included, or the features may be combined with other features.

It should be noted that all the units/modules described in device embodiments of this application are logical units/modules. Physically, a logical unit/module may be a physical unit/module, or may be a part of a physical unit/module, or may be implemented as a combination of a plurality of physical units/modules. Physical implementations of the logical units/modules are not most important, and only a combination of functions implemented by the logical units/modules is a key to resolve the technical problem proposed in this application. In addition, to highlight innovation of this application, the foregoing device embodiments of this application do not introduce a unit/module that is not closely related to resolving the technical problem proposed in this application, which does not indicate that there is no other unit/module in the foregoing device embodiments.

It should be noted that in the examples and specification of this patent, relational terms such as first and second are only used to distinguish one entity or operation from another entity or operation, and do not necessarily require or imply that there is any actual relationship or order between the entities or operations. In addition, the terms "include", "comprise", or any variants thereof are intended to cover a non-exclusive inclusion. Therefore, a process, method, article, or device that includes a series of elements not only includes the elements, but also includes other elements not specified expressly, or may include inherent elements of the process, method, article, or device. Unless otherwise specified, an element limited by "including a/an" does not exclude other same elements existing in the process, method, the article, or device that includes the foregoing elements.

Although this application has been illustrated and described with reference to some preferred embodiments of this application, a person of ordinary skill in the art should understand that various modifications may be made to embodiments in form and detail without departing from the scope of this application.

## Claims

1. A communication method, comprising:
performing, by a first terminal device, a connection to a first wireless access device based on a first channel;
receiving, by the first terminal device, a first instruction for establishing a connection of peer-to-peer communication to a second terminal device;
determining that both the first terminal device and the second terminal device support performing peer-to-peer communication based on the first channel; and
establishing peer-to-peer communication between the first terminal device and the second terminal device based on the first channel.

2. The method according to claim 1, wherein the first channel is a dynamic frequency selection channel.

3. The method according to claim 2, further comprising:
if it is determined that the first terminal device or the second terminal device does not support performing peer-to-peer communication based on the first channel, and it is determined that the second terminal device performs a connection to a second wireless access device based on a second channel, wherein the second channel comprises any channel of non-dynamic frequency selection channels,
establishing peer-to-peer communication between the first terminal device and the second terminal device based on the second channel.

4. The method according to claim 2, further comprising:
if it is determined that the first terminal device or the second terminal device does not support performing peer-to-peer communication based on the first channel, and it is determined that the second terminal device performs a connection to a second wireless access device based on a third channel, wherein the third channel is a dynamic frequency selection channel,
establishing peer-to-peer communication between the first terminal device and the second terminal device based on a fourth channel, wherein the fourth channel comprises any channel of non-dynamic frequency selection channels.

5. The method according to claim 2, further comprising:
if it is determined that the first terminal device or the second terminal device does not support performing peer-to-peer communication based on the first channel, and it is determined that the second terminal device performs no connection to a second wireless access device,
establishing peer-to-peer communication between the first terminal device and the second terminal device based on a fourth channel, wherein the fourth channel comprises any channel of non-dynamic frequency selection channels.

6. The method according to claim 1, further comprising:
performing, by the first terminal device, no connection to the first wireless access device; and
if it is determined that the second terminal device performs a connection to a second wireless access device based on a second channel, wherein the second channel comprises any channel of non-DFS channels,
establishing peer-to-peer communication between the first terminal device and the second terminal device based on the second channel.

7. The method according to claim 1, further comprising:
performing, by the first terminal device, no connection to the first wireless access device; and
if it is determined that the second terminal device performs a connection to a second wireless access device based on a third channel, and it is determined that both the first terminal device and the second terminal device support performing peer-to-peer communication based on the third channel, wherein the third channel is a dynamic frequency selection channel,
establishing peer-to-peer communication between the first terminal device and the second terminal device based on the third channel.

8. The method according to claim 1, further comprising:
performing, by the first terminal device, no connection to the first wireless access device; and
if it is determined that the second terminal device performs a connection to a second wireless access device based on a third channel, and it is determined that the first terminal device or the second terminal device does not support performing peer-to-peer communication based on the third channel, wherein the third channel is a dynamic frequency selection channel,
establishing peer-to-peer communication between the first terminal device and the second terminal device based on a fourth channel, wherein the fourth channel comprises any channel of non-dynamic frequency selection channels.

9. The method according to claim 1, further comprising:
performing, by the first terminal device, no connection to the first wireless access device; and
if it is determined that the second terminal device performs no connection to a second wireless access device,
establishing peer-to-peer communication between the first terminal device and the second terminal device based on a fourth channel, wherein the fourth channel comprises any channel of non-dynamic frequency selection channels.

10. The method according to claim 1, further comprising:
if the first terminal device performs the connection to the first wireless access device based on a fifth channel,
establishing peer-to-peer communication between the first terminal device and the second terminal device based on the fifth channel, wherein the fifth channel comprises any channel of non-dynamic frequency selection channels.

11. The method according to any one of claims 1 to 10, wherein the first terminal device is a group owner device, and the second terminal device is a group client device.

12. An electronic device, comprising: a memory and a processor, wherein the memory is configured to store instructions executed by one or more processors of the electronic device, and the processor is one of the one or more processors of the electronic device and is configured to perform the communication method according to any one of claims 1 to 11.

13. A readable storage medium, wherein the readable storage medium stores instructions, and the instructions, when executed on the electronic device, cause the electronic device to perform the communication method according to any one of claims 1 to 11.
